# EUROPEAN PATENT SPECIFICATION

(11) **EP 2 978 162 B1**
(45) Date of publication and mention of the grant of the patent: **13.10.2021**
(21) Application number: 15177287.8
(22) Date of filing: 17.07.2015
(51) Int. Cl.: H04L 9/32

(54) **ANTI-COUNTERFEITING VERIFICATION METHOD, DEVICE AND SYSTEM**
FÄLSCHUNGSSICHERES ÜBERPRÜFUNGSVERFAHREN, VORRICHTUNG UND SYSTEM
PROCÉDÉ, DISPOSITIF ET SYSTÈME DE VÉRIFICATION DE CONTREFAÇONS

(30) Priority: 21.07.2014 CN 201410348001
(43) Date of publication of application: 27.01.2016
(73) Proprietor: Xiaomi Inc., Beijing 100085 (CN)
(72) Inventor: LIU, Wei, Haidian District Beijing 100085 (CN); MA, Ji, Haidian District Beijing 100085 (CN); MA, Sen, Haidian District Beijing 100085 (CN); ZHANG, Liang, Haidian District Beijing 100085 (CN)
(74) Representative: Sadler, Peter Frederick

(56) References cited:
- WO-A1-2012/087435
- US-A1- 2011 107 100
- US-A1- 2012 284 514
- US-A1- 2013 283 352
- KEITH MAINWARING UNIS UKRAINE: "Draft Technical Report on Counterfeiting;WD 6", ITU-T DRAFT ; STUDY PERIOD 2013-2016, INTERNATIONAL TELECOMMUNICATION UNION, GENEVA ; CH, vol. 8/11, 20 February 2014 (2014-02-20), pages 1-67, XP044061435, [retrieved on 2014-02-20]
- Joseph M Kizza: "Feige-Fiat-Shamir ZKP Scheme Revisited", International Journal of Computing and ICT Research Journal of Computing and ICT Research, 1 June 2010 (2010-06-01), pages 9-19, XP055580588, Retrieved from the Internet: URL:http://ijcir.mak.ac.ug/volume4-number1 /article2.pdf [retrieved on 2019-04-12]
- Michael S Kirkpatrick ET AL: "Software Techniques to Combat Drift in PUF-based Authentication Systems", Workshop on Secure Component and System Identification, 1 January 2010 (2010-01-01), XP055183948, SECSI 2010 Retrieved from the Internet: URL:http://w3.cs.jmu.edu/kirkpams/papers/s ecsi10-drift.pdf [retrieved on 2015-04-17]
- Ayman Mohammad Bahaa-Eldin ET AL: "A comprehensive Software Copy Protection and Digital Rights Management platform", Ain Shams Engineering Journal, vol. 5, no. 3, 14 April 2014 (2014-04-14), pages 703-720, XP055707309, AMSTERDAM, NL ISSN: 2090-4479, DOI: 10.1016/j.asej.2014.03.001

## Description

### TECHNICAL FIELD

The present disclosure generally relates to the field of terminal technology, and more particularly, to an anti-counterfeiting verification method, a device and a system thereof.

### BACKGROUND

Along with the popularization of mobile phones, tablet PCs, smart televisions and the like, a large amount of imitations appear on the market. These imitations are enough to cheat common users in terms of appearance and operating systems. As a result, users find it difficult to distinguish genuine devices from counterfeit ones.

In relevant anti-counterfeiting verification methods, an application program may locally conduct anti-counterfeiting verification of a terminal to be verified after the application program is downloaded and installed in the terminal to be verified. The application program acquires configuration parameters and performance parameters of the terminal to be verified, and then matches them with configuration parameters and performance parameters stored in a database. The terminal to be verified may be regarded as a certified product (or genuine article) if the matching is basically the same. Otherwise the terminal to be verified may be regarded as an imitation.

In the process of the realization of the present disclosure, the foregoing technology is found at least the following defects: some lawless persons (criminals) induce users to download and install counterfeit application programs by means of counterfeiting application programs, and the counterfeit application programs may feed back to users a verification result that a terminal to be verified is a certified product through various manners. Therefore, the foregoing technology still has the problem of low anti-counterfeiting success rate by verification resulted from counterfeiting application programs.

### SUMMARY

The invention is defined in the independent claims, to which the reader is now directed. Preferred or advantageous embodiments are set out in the dependent claims.

In order to solve the problem of low anti-counterfeiting success rate by verification resulted from counterfeiting application programs in the foregoing technology, the embodiments of the present disclosure provide an anti-counterfeiting verification method, a device and a system thereof. The technical solution is as below:

According to the first aspect of the embodiments of the present disclosure, an anti-counterfeiting verification method is provided, comprising:
generating an encrypted message corresponding to an i^{th} verification step, which is such a verification step among all n verification steps arrayed in a predesigned order for verifying a terminal to be verified, where 1≤i≤n;
sending the encrypted message to the terminal to be verified;
receiving a call request sent from the terminal to be verified and used to call the ith verification step;
executing the i^{th} verification step if the call request is a call request initiated according to an encrypted message corresponding to the i^{th} verification step;
calculating i=i+1 and executing the step of generating an encrypted message corresponding to the i^{th} verification step if the i^{th} verification step succeeds in verification and i≠n;
sending failed verification results to the terminal to be verified if the i^{th} verification step fails in verification; and
sending successful verification results to the terminal to be verified if the i^{th} verification step succeeds in verification and i=n.

The generating an encrypted message corresponding to an i^{th} verification step comprises:
encrypting an unencrypted message by means of a private key and acquiring the encrypted message corresponding to the i^{th} verification step;
wherein, when 1≤i≤n, the unencrypted message comprising associated information relating to the terminal to be verified and a step number corresponding to the i^{th} verification step; or
when i=1, the unencrypted message comprising associated information relating to the terminal to be verified; when i≥2, the unencrypted message comprising associated information relating to the terminal to be verified and a step number corresponding to an (i-1)^{th} verification step which has been called successfully.

The executing the i^{th} verification step if the call request is a call request initiated according to an encrypted message corresponding to the i^{th} verification step comprises:
detecting whether the call request carries the encrypted message corresponding to the i^{th} verification step;
reading the encrypted message out in case of carrying the encrypted message;
decrypting the encrypted message by means of the private key and acquiring the unencrypted message;
determining a step number corresponding to the i^{th} verification step according to contents of the unencrypted message;
detecting whether an actual step number called by the call request is matched with a step number corresponding to the i^{th} verification step; and
executing the i^{th} verification step if the actual step number is matched with a step number corresponding to the i^{th} verification step.

Optionally, the executing the i^{th} verification step if the call request is a call request initiated according to an encrypted message corresponding to the i^{th} verification step also comprises:
reading out a time message comprised in the unencrypted message if the unencrypted message also comprises the time message;
detecting, according to the time message, whether a moment at which the call request is received is within a valid time frame; and
executing the i^{th} verification step if a moment at which the call request is received is within the valid time frame and the actual step number is matched with a step number corresponding to the i^{th} verification step.

The executing the i^{th} verification step comprises: verifying, according to a geographical position corresponding to the terminal to be verified and to a unique identification, the terminal to be verified if the i^{th} verification step is a geographical position verification step.

Optionally, the verifying, according to basic information relating to the terminal to be verified and to an order database, the terminal to be verified comprises:
querying whether the order database has basic information matched with basic information relating to the terminal to be verified;
determining the i^{th} verification step to be successful in case of having basic information matched with basic information relating to the terminal to be verified.

At least one of the verification steps is a geographical position verification step. The verifying, according to a geographical position corresponding to the terminal to be verified and to a unique identification, the terminal to be verified comprises:
detecting whether the terminal to be verified meets a predetermined condition, which refers to receiving ,within a scheduled time frame, a call request sent from such a terminal to be verified as coming from different geographical positions but having the same unique identification of the terminal to be verified; and
determining the i^{th} verification step to be successful if the terminal to be verified does not meet the predetermined condition.

Optionally, the method also comprises:
receiving a verification query request carrying a user account;
querying whether verification results corresponding to the user account exist; and
responding to the verification query request by using the verification results if exist.

According to the second aspect of the embodiments of the present disclosure, an anti-counterfeiting verification method is provided, comprising:
receiving an encrypted message sent from a server and corresponding to an i^{th} verification step, which is such a verification step among all n verification steps arrayed in a predesigned order for verifying a terminal to be verified, 1≤i≤n;
sending to the server a call request for calling the i^{th} verification step according to the encrypted message; and
receiving verification results indicating failure or success sent from the server.

The sending to the server a call request for calling the i^{th} verification step according to the encrypted message comprises:
generating a call request for calling the i^{th} verification step, the call request carrying an encrypted message sent from the server and corresponding to the i^{th} verification step; and
sending the call request to the server;
wherein, the encrypted message being acquired by the server by encrypting an unencrypted message by means of a private key;
when 1≤i≤n, the unencrypted message comprising associated information relating to the terminal to be verified and a step number corresponding to the i^{th} verification step; or
when i=1, the unencrypted message comprising associated information relating to the terminal to be verified; when i≥2, the unencrypted message comprising associated information relating to the terminal to be verified and a step number corresponding to an (i-1)^{th} verification step which has been called successfully

At least one of the verification steps is a geographical position verification step and a geographical position of the terminal is sent from the terminal to the server or obtained by the server according to an IP address corresponding to the terminal and a unique identification is sent to the server, if the i^{th} verification step is a geographical position verification step.

Optionally, the method also comprises:
acquiring a user account associated with the terminal to be verified;
sending the user account to the server; and
receiving verification results fed back when the server succeeds in querying the verification results corresponding to the user account.

According to the third aspect of the embodiments of the present disclosure, an anti-counterfeiting verification device, such as a server, is provided, for carrying out the method of the first aspect. The anti-counterfeiting verification device may comprise:
a cryptograph generation module, configured to generate an encrypted message corresponding to an i^{th} verification step, which is a verification step among all n verification steps arrayed in a predesigned order for verifying a terminal, where 1≤i≤n;
a cryptograph sending module, configured to send the encrypted message to the terminal to be verified;
a request receiving module, configured to receive a call request sent from the terminal and used to call the i^{th} verification step;
a verification execution module, configured to execute the i^{th} verification step if the call request is a call request initiated according to an encrypted message corresponding to the i^{th} verification step;
the cryptograph generation module is also configured to calculate i+1 and execute the step of generating an encrypted message corresponding to the i+1^{th} verification step when the i^{th} verification step succeeds in verification and i≠n;
a first sending module, configured to send failed verification results to the terminal if the i^{th} verification step fails in verification; and
a second sending module, configured to send successful verification results to the terminal if the i^{th} verification step succeeds in verification and i=n.

Optionally, the cryptograph generation module is also configured to encrypt an unencrypted message by means of a private key and acquire an encrypted message corresponding to the i^{th} verification step;
wherein, when 1≤i≤n, the unencrypted message comprise associated information relating to the terminal to be verified and a step number corresponding to the i^{th} verification step; or
when i=1, the unencrypted message comprises associated information relating to the terminal to be verified; when i≥2, the unencrypted message comprises associated information relating to the terminal to be verified and a step number corresponding to an (i-1)^{th} verification step which has been called successfully.

Optionally, the verification execution module comprises: a cryptograph detection submodule, a cryptograph reading submodule, a cryptograph decryption submodule, a number determination submodule, a number detection submodule and a verification execution submodule.

The cryptograph detection submodule is configured to detect whether the call request carries the encrypted message corresponding to the i^{th} verification step.

The cryptograph reading submodule is configured to read out the encrypted message if exist.

The cryptograph decryption submodule is configured to decrypt the encrypted message by means of the private key and acquire the unencrypted message.

The number determination submodule is configured to determine a step number corresponding to the i^{th} verification step according to contents of the unencrypted message.

The number detection submodule is configured to detect whether an actual step number called by the call request is matched with a step number corresponding to the i^{th} verification step.

The verification execution submodule is configured to execute the i^{th} verification step if the actual step number is matched with a step number corresponding to the i^{th} verification step.

Optionally, the verification execution module also comprises a message reading submodule and a time detection submodule.

The information reading submodule is configured to read out a time message comprised in the unencrypted message if the unencrypted message also comprises the time message.

The time detection submodule is configured to detect, according to the time message, whether a moment at which the call request is received is within a valid time frame.

The verification execution submodule is also configured to execute the i^{th} verification step if the moment at which the call request is received is within the valid time frame and the actual step number is matched with a step number corresponding to the i^{th} verification step.

Optionally, the verification execution submodule comprises: a first verification submodule; and/or a second verification submodule; and/or a third verification submodule; and/or a fourth verification submodule.

The first verification submodule is configured to verify, according to configuration parameters of the terminal to be verified, the terminal to be verified if the i^{th} verification step is a configuration parameter verification step.

The second verification submodule is configured to verify the terminal, according to performance parameters of the terminal, if the i^{th} verification step is a performance parameter verification step.

The third verification submodule is configured to verify the terminal, according to basic information relating to the terminal, if the i^{th} verification step is an order verification step, and the order database comprises basic information relating to at least one terminal.

The fourth verification submodule is configured to verify the terminal, according to a geographical position corresponding to the terminal and to a unique identification, if the i^{th} verification step is a geographical position verification step.

Optionally, the third verification submodule is also configured to query whether basic information matched with basic information relating to the terminal exists in the order database, and to determine the i^{th} verification step to be successful if basic information matched with basic information relating to the terminal exists.

Optionally, the fourth verification submodule is also configured to: detect whether the terminal meets a predetermined condition, which refers to receiving, within a scheduled time frame, a call request sent from a terminal as coming from different geographical positions but having the same unique identification of the terminal to be verified; and to determine the i^{th} verification step to be successful if the terminal does not meet the predetermined condition.

Optionally, the device also comprises:
a query receiving module, configured to receive a verification query request carrying a user account;
a result query module, configured to query whether verification results corresponding to the user account exist; and
a request response module, configured to respond to the verification query request by using the verification results if they exist.

According to the fourth aspect of the embodiments of the present disclosure, an anti-counterfeiting verification device is provided for carrying out the method of the third aspect. The anti-counterfeiting verification device may comprise:
a cryptograph receiving module, configured to receive an encrypted message sent from a server and corresponding to an i^{th} verification step, which is such a verification step among all n verification steps arrayed in a predesigned order for verifying a terminal to be verified, 1≤i≤n;
a request sending module, configured to send to the server a call request for calling the i^{th} verification step according to the encrypted message; and
a result receiving module, configured to receive verification results indicating failure or success sent from the server.

Optionally, the request sending module comprises a request generation submodule and a request sending submodule.

The request generation submodule is configured to generate a call request for calling the i^{th} verification step, the call request carries an encrypted message sent from the server and corresponding to the i^{th} verification step.

The request sending submodule is configured to send the call request to the server.

Wherein, the encrypted message is acquired by the server by encrypting an unencrypted message by means of a private key.

When 1≤i≤n, the unencrypted message comprises associated information relating to the terminal to be verified and a step number corresponding to the i^{th} verification step.

Or, when i=1, the unencrypted message comprises associated information relating to the terminal to be verified; when i≥2, the unencrypted message comprises associated information relating to the terminal to be verified and a step number corresponding to an (i-1)^{th} verification step which has been called successfully.

Optionally, the device also comprises:
an account acquisition module, configured to acquire a user account associated with the terminal to be verified;
an account sending module, configured to send the user account to the server; and
a result feedback module, configured to receive verification results fed back when the server succeeds in querying the verification results corresponding to the user account.

An anti-counterfeiting verification device may comprise:
a processor; and
a memory configured to store instructions executable by the processor;
wherein, the processor is configured to:
   generate an encrypted message corresponding to an i^{th} verification step, which is such a verification step among all n verification steps arrayed in a predesigned order for verifying a terminal to be verified, 1≤i≤n;
   send the encrypted message to the terminal to be verified;
   receive a call request sent from the terminal to be verified and used to call the i^{th} verification step;
   execute the i^{th} verification step if the call request is a call request initiated according to an encrypted message corresponding to the i^{th} verification step;
   calculate i=i+1 and execute the step of generating an encrypted message corresponding to the i^{th} verification step if the i^{th} verification step succeeds in verification and i≠n;
   send failed verification results to the terminal to be verified if the i^{th} verification step fails in verification; and
   send successful verification results to the terminal to be verified if the i^{th} verification step succeeds in verification and i=n; and be configured to perform the other steps of the first aspect.

An anti-counterfeiting verification device may comprise:
a processor; and
a memory configured to store instructions executable by the processor;
wherein, the processor is configured to:
   receive an encrypted message sent from a server and corresponding to an i^{th} verification step, which is such a verification step among all n verification steps arrayed in a predesigned order for verifying a terminal to be verified, 1≤i≤n;
   send to the server a call request for calling the i^{th} verification step according to the encrypted message; and
   receive verification results indicating failure or success sent from the server; and be configured to perform the other steps of the second aspect.

According to the seventh aspect of the embodiments of the present disclosure, an anti-counterfeiting verification system is provided, comprising a terminal to be verified and a server connected to the terminal to be verified through wireless network or wired network.

The server comprises an anti-counterfeiting verification device as recited in the third aspect, and the terminal to be verified comprises an anti-counterfeiting verification device as recited in the fourth aspect.

The technical solution according to the embodiments of the present disclosure may have the following beneficial effects.

In conclusion, in the anti-counterfeiting verification method according to this exemplary embodiment, before executing an i^{th} verification step to verify a terminal to be verified, a server generates an encrypted message corresponding to the i^{th} verification step, and sends the encrypted message to a client side. After receiving a call request sent from the terminal to be verified and used to call the i^{th} verification step, the server doesn't execute the i^{th} verification step until the call request is determined as a call request initiated according to the encrypted message corresponding to the i^{th} verification step. The anti-counterfeiting verification method solves the problem of low anti-counterfeiting success rate by verification resulted from counterfeiting application programs in the background art. The verification success rate is improved because a counterfeit client side cannot meet conditions for triggering and executing the i^{th} verification step.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a schematic diagram showing an implementation environment involved in embodiments of the present disclosure according to an exemplary embodiment.
Fig. 2 is a flow chart showing part of an anti-counterfeiting verification method according to an exemplary embodiment.
Fig. 3 is a flow chart showing part of an anti-counterfeiting verification method according to another exemplary embodiment.
Fig. 4 is a flow chart showing an anti-counterfeiting verification method according to a further exemplary embodiment.
Fig. 5 is a block diagram of an anti-counterfeiting verification device according to an exemplary embodiment.
Fig. 6 is a block diagram of an anti-counterfeiting verification device according to another exemplary embodiment.
Fig. 7 is a block diagram of an anti-counterfeiting verification device according to a further exemplary embodiment.
Fig. 8 is a block diagram of an anti-counterfeiting verification device according to a further exemplary embodiment.
Fig. 9 is a block diagram of an anti-counterfeiting verification system according to an exemplary embodiment.
Fig. 10 is a block diagram of a device according to an exemplary embodiment.
Fig. 11 is a block diagram of a device according to an exemplary embodiment.

Specific embodiments of the present disclosure are shown by the above drawings, and more detailed description will be made hereinafter. These drawings and text description are not for limiting the scope of conceiving the present disclosure in any way, but for illustrating the concept of the present disclosure for those skilled in the art by referring to specific embodiments.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

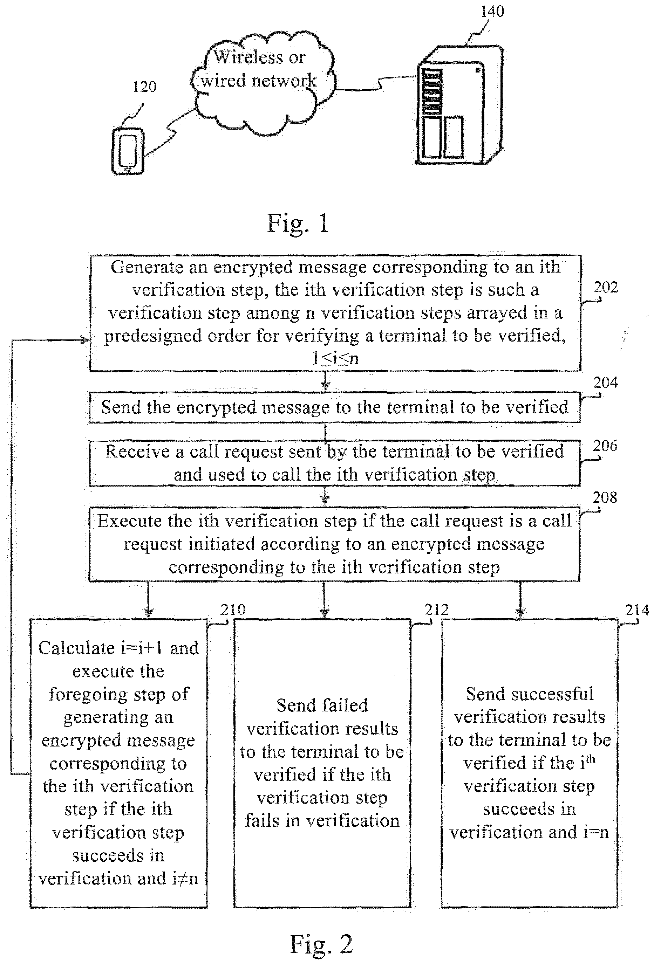

Fig. 1 is a schematic diagram showing an implementation environment involved in embodiments of the present disclosure according to an exemplary embodiment. The implementation environment includes a terminal to be verified 120 and a server 140. Wherein:
the terminal to be verified 120 may be a mobile phone, a tablet computer, an ebook reader, a MP3 (Moving Picture Experts Group Audio Layer III) player, a MP4 (Moving Picture Experts Group Audio Layer IV) player, a smart television and the like.

The terminal to be verified 120 is connected to the server 140 through wired network or wireless network.

The server 140 may be a server, or a server cluster comprising a plurality of servers, or a cloud computing service center.

In a possible implementation, a client side configured to execute the anti-counterfeiting verification method provided by the embodiments of the present disclosure is running in the terminal to be verified 120.

In addition, in other possible implementations, the client side may also run in other terminal equipment connected to the terminal to be verified 120. For example, the client side is running in a computer, which is connected to the terminal to be verified 120 through a USB (Universal Serial Bus) data line, wired network or wireless network for acquiring information relating to the terminal to be verified 120.

Fig. 2 is a flow chart showing some steps from an anti-counterfeiting verification method according to an exemplary embodiment which is illustrated by applying the anti-counterfeiting verification method into a server. The anti-counterfeiting verification method may include following steps.

In Step 202, an encrypted message corresponding to an i^{th} verification step is generated, the i^{th} verification step is such a verification step among all n verification steps arrayed in a predesigned order for verifying a terminal to be verified, 1≤i≤n.

In Step 204, the encrypted message is sent to the terminal to be verified.

In Step 206, a call request sent from the terminal to be verified and used to call the ith verification step is received.

In Step 208, the i^{th} verification step is executed if the call request is a call request initiated according to an encrypted message corresponding to the i^{th} verification step.

In Step 210, i=i+1 is calculated and the foregoing step of generating an encrypted message corresponding to the i^{th} verification step is executed if the i^{th} verification step succeeds in verification and i≠n.

In Step 212, failed verification results are sent to the terminal to be verified if the i^{th} verification step fails in verification.

In Step 214, successful verification results are sent to the terminal to be verified if the i^{th} verification step succeeds in verification and i=n.

In conclusion, in the anti-counterfeiting verification method according to this exemplary embodiment, before executing an i^{th} verification step to verify a terminal to be verified, a server generates an encrypted message corresponding to the i^{th} verification step, and sends the encrypted message to a client side. After receiving a call request sent from the terminal to be verified and used to call the i^{th} verification step, the server doesn't execute the i^{th} verification step until the call request is determined as a call request initiated according to the encrypted message corresponding to the i^{th} verification step. The anti-counterfeiting verification method solves the problem of low anti-counterfeiting success rate by verification resulted from counterfeiting application programs in the background art. The verification success rate is improved because a counterfeit client side cannot meet conditions for triggering and executing the i^{th} verification step.

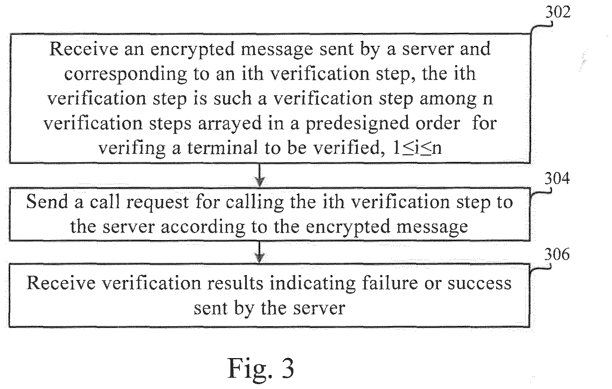

Fig. 3 is a flow chart showing some steps from an anti-counterfeiting verification method according to another exemplary embodiment which is illustrated by applying the anti-counterfeiting verification method to a terminal to be verified or other terminal equipment connected to the terminal to be verified. The anti-counterfeiting verification method may include the following steps.

In Step 302, an encrypted message sent from a server and corresponding to an i^{th} verification step is received, the i^{th} verification step is such a verification step among all n verification steps arrayed in a predesigned order for verifying a terminal to be verified, 1≤i≤n.

In Step 304, a call request for calling the i^{th} verification step is sent to the server according to the encrypted message.

In Step 306, verification results indicating failure or success sent from the server are received.

In conclusion, in the anti-counterfeiting verification method according to the embodiment, by receiving an encrypted message sent from a server and corresponding to an i^{th} verification step, a terminal to be verified sends to the server a call request for calling the i^{th} verification step according to the encrypted message so that the server verifies the terminal to be verified according to the foregoing call request decision and feeds back verification results to the terminal to be verified, solving the problem of low anti-counterfeiting success rate by verification resulted from counterfeiting application programs in the background art. The verification success rate is improved because a counterfeit client side cannot meet conditions for triggering and executing the i^{th} verification step.

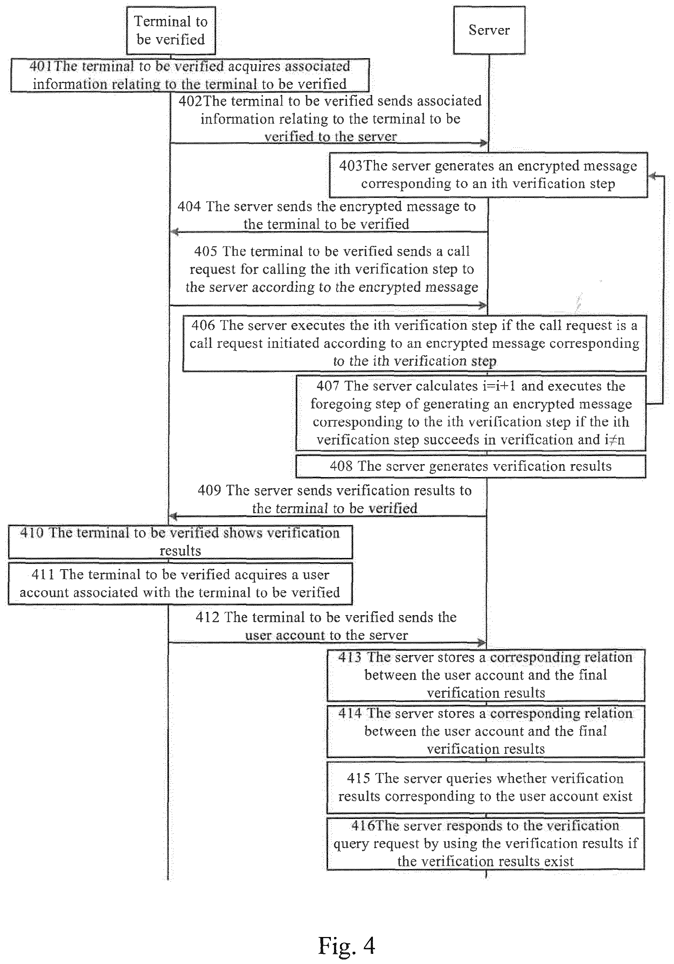

Fig. 4 is a flow chart showing an anti-counterfeiting verification method according to a further exemplary embodiment which is illustrated by applying the anti-counterfeiting verification method into an implementation environment as shown in Fig.1. The anti-counterfeiting verification method may include following steps.

In Step 401, associated information relating to the terminal to be verified is acquired by the terminal to be verified.

Users may conduct an anti-counterfeiting verification of a terminal to be verified by feat of a client side and a server. Users may either directly download and install a client side in a terminal to be verified, or download and install a client side in other terminal equipment. Wherein, when a client side is installed in other terminal equipment, the terminal equipment is connected to a terminal to be verified through USB data line, wireless network or wired network. In the present embodiment, it is illustrated only by an example in which a client side is installed in a terminal to be verified.

Firstly, the client side acquires associated information relating to the terminal to be verified. Optionally, the associated information may be a unique identification of the terminal to be verified, for example, IMEI (International Mobile Equipment Identity) number.

In Step 402, associated information relating to the terminal to be verified is sent from the terminal to be verified to the server.

Correspondingly, the server receives the associated information sent from the terminal to be verified.

In Step 403, an encrypted message corresponding to an i^{th} verification step is generated by the server.

Wherein, the i^{th} verification step is such a verification step among all n verification steps arrayed in a predesigned order for verifying a terminal to be verified, 1≤i≤n. A server presets n verification steps, by which a terminal to be verified is verified. The n verification steps are arrayed in a predesigned order, which may be preset as one term or multiple terms.

For example, if n=4, the predesigned order corresponding to verification steps 1 to 4 may be only one term: verification step 1→verification step 2→verification step 3→verification step 4.

For another example, if n=5, the predesigned order corresponding to verification steps 1 to 5 may be two terms, wherein the predesigned order of the first term is: verification step 1→verification step 2→verification step 3→verification step 4→verification step 5; the predesigned order of the second term is: verification step 1→verification step 2→verification step 4→verification step 3→verification step 5.

In addition, in the anti-counterfeiting verification solution according to the embodiments of the present disclosure, before a server executes any execution step for verification of a terminal to be verified, the authenticity of a client side running in the terminal to be verified shall be verified by way of an encrypted message so as to prevent a counterfeit client side from calling verification steps not according to a predesigned order or skipping some verification steps to acquire successful verification results from the client side. Wherein, the server may generate an encrypted message by the following mode:
the server encrypts an unencrypted message by means of a private key, thus acquiring the encrypted message corresponding to the i^{th} verification step. Wherein, the unencrypted message may include the two following possible implementations:
in a first possible implementation, when 1≤i≤n, the unencrypted message includes associated information relating to the terminal to be verified and a step number corresponding to the i^{th} verification step.

In a second possible implementation, when i=1, the unencrypted message includes associated information relating to the terminal to be verified; when i≥2, the unencrypted message includes associated information relating to the terminal to be verified and a step number corresponding to an (i-1)^{th} verification step which has been called successfully.

In Step 404, the encrypted message is sent to the terminal to be verified by the server.

Correspondingly, the terminal to be verified receives the encrypted message sent from the server.

In Step 405, a call request for calling the i^{th} verification step is sent from the terminal to be verified to the server according to the encrypted message.

The Step may include the following two substeps:

In substep I, a call request for calling the i^{th} verification step is generated, and the call request carries an encrypted message sent from the server and corresponding to the i^{th} verification step.

In substep II, the call request is sent to the server.

After receiving an encrypted message, a terminal to be verified does not need to process the encrypted message, it just needs to carry the encrypted message in a call request in case of generating the call request for calling an i^{th} verification step.

In addition, if a copyrighted client side is running in the terminal to be verified, the client side will selectively and successively call n verification steps according to the foregoing predesigned order. Different API (Application Programming Interface) ports may be configured by the server in advance for different verification steps. For example, the number of an API port corresponding to verification step 1 is 41, the number of an API port corresponding to verification step 2 is 42, and the number of an API port corresponding to verification step 3 is 43, etc. It is only necessary for the client side to call different API ports provided by a server in case of sending to the server call requests for calling different verification steps. The server may also determine, according to the number of the API port called by the client side, the actual step number of the verification step called by the client side.

Correspondingly, the server receives a call request sent from the terminal to be verified and used to call the i^{th} verification step.

In Step 406, the i^{th} verification step is executed by the server if the call request is a call request initiated according to an encrypted message corresponding to the i^{th} verification step.

Before executing the i^{th} verification step, the server needs to verify whether a call request sent from the terminal to be verified is initiated by the terminal to be verified according to an encrypted message corresponding to the i^{th} verification step so as to discern the authenticity of the client side running in the terminal to be verified, thus preventing lawless persons from acquiring successful verification results by counterfeiting a client side.

The Step may include following substeps:

In substep I, it is detected whether the call request carries the encrypted message corresponding to the i^{th} verification step.

If a call request carries no encrypted message corresponding to the i^{th} verification step, this means that the client side running in the terminal to be verified does not send a call request carrying an encrypted message to the server according to the preset verification process, based on which, it is determined that this client side may be a counterfeit one. Under the circumstances, the server may directly generate failed verification results.

In substep II, the encrypted message is read out in case of carrying the encrypted message.

In substep III, the encrypted message is decrypted by means of the private key and the unencrypted message is acquired.

It should be noticed that, the encrypted message is acquired by the server by encrypting an unencrypted message by means of a private key. Therefore, the encrypted message may only be decrypted by the server. In other words, any other application program or equipment except the server is unable to counterfeit or change the foregoing encrypted message, thus ensuring the accuracy of the server in verification of the call request.

For example, if a call request carries an encrypted message but the server is unable to decrypt the encrypted message by means of a private key, this means that this encrypted message is a counterfeit one, for example a counterfeit client side attempts to skip some verification steps by counterfeiting step numbers included in an unencrypted message. Under these circumstances, the server may directly generate failed verification results.

In substep IV, a step number corresponding to the i^{th} verification step is determined according to contents of the unencrypted message.

Once an unencrypted message is acquired by successful decryption, the server may read out the step number corresponding to the i^{th} verification step included in the unencrypted message; or the server may read out the step number corresponding to the (i-1)^{th} verification step successfully called and included in the unencrypted message, and determine the step number corresponding to the i^{th} verification step according to the step number corresponding to the (i-1)^{th} verification step and to the predesigned order.

In substep V, it is detected whether an actual step number called by the call request is matched with a step number corresponding to the i^{th} verification step.

It has been introduced in Step 405 that the server may determine, according to the number of the API port called when the terminal to be verified sends a call request, the actual step number called by the call request, and further compare the actual step number with a step number corresponding to the i^{th} verification step determined after decryption, and detect whether they are matched.

In substep VI, the i^{th} verification step is executed if the actual step number is matched with a step number corresponding to the i^{th} verification step.

In addition, if the actual step number is not matched with a step number corresponding to the i^{th} verification step, this means that the terminal to be verified does not call the validation step according to the foregoing predesigned order, and the server may directly generate failed verification results. Therefore, the possibility that lawless persons attempt to accomplish n verification steps and further acquire a successful verification result such as by skipping some verification steps or counterfeiting parameters of a terminal to be verified, may be eliminated to a great degree.

Optionally, in order to further strengthen the verification mechanism of a call request sent from the terminal to be verified and improve the accuracy of verification results, the server may carry a time message in an unencrypted message in generating the foregoing encrypted message. Wherein, the time message is configured to control the time when the terminal to be verified sends a call request. The time message may be either a timestamp corresponding to a moment when the server generates an encrypted message, or a timestamp corresponding to a moment when the server receives a call request at the latest.

Before the server executes the i^{th} verification step, the following steps shall be executed if the unencrypted message also includes a time message:
1. A time message included in the unencrypted message is read out if the unencrypted message also includes the time message.
2. It is detected according to the time message whether a moment at which the call request is received is within a valid time frame.
3. The i^{th} verification step is executed if a moment at which the call request is received is within the valid time frame and the actual step number is matched with a step number corresponding to the i^{th} verification step.

The server will not execute the i^{th} verification step for verification of the terminal to be verified unless the call request meets both the above detection results.

In addition, the server verifies the terminal to be verified The i^{th} verification step includes the following implementation:

The terminal to be verified is verified by a server according to a geographical position corresponding to the terminal to be verified and to a unique identification if the i^{th} verification step is a geographical position verification step.

Wherein, geographical position corresponding to the terminal to be verified may either be sent from the terminal to be verified to the server, or be acquired by the server according to an IP (Internet Protocol) address corresponding to the terminal to be verified. The unique identification generally is an IMEI number.

The Step includes:
1. detecting whether the terminal to be verified meets the predetermined condition; and
2. determining the i^{th} verification step to be successful if the terminal to be verified does not meet the predetermined condition.

Wherein, the predetermined condition refers to receiving, within a scheduled time frame, a call request sent from such a terminal to be verified as coming from different geographical positions but having the same unique identification of the terminal to be verified. When call requests are sent to the server by terminals to be verified with the same unique identification from different geographical positions (the different geographical positions refer to a plurality of geographical positions far away from one another, for example, different cities) within a short time, as one unique identification is only mapping to one terminal, this means that in terminals to be verified in different geographical positions, there is only one at most is a certified product.

Therefore, when a terminal to be verified meets the foregoing predetermined condition, the server may send a prompt message to terminals to be verified in different geographical positions, the prompt message is configured to prompt users that terminals purchased may be imitations and may request users to conduct further verification in an after-sales service center.

In Step 407, i=i+1 is calculated and the foregoing step of generating an encrypted message corresponding to the i^{th} verification step is executed by the server if the i^{th} verification step succeeds in verification and i≠n.

If the i^{th} verification step succeeds in verification and i≠n, the terminal to be verified may be continued verifying by the server by means of an (i+1)^{th} verification step. The server calculates i=i+1, executes the foregoing Steps 403 to 406 again, and verifies the terminal to be verified by means of the (i+1)^{th} verification step.

The process in which the server verifies the terminal to be verified by means of the (i+1)^{th} verification step is the same as that in which the server verifies the terminal to be verified by means of the i^{th} verification step as mentioned in Steps 403 to 406, not repeated herein.

In Step 408, the server generates verification results.
1. Failed verification results are sent to the terminal to be verified if the i^{th} verification step fails in verification.
   This signifies that configuration parameters, performance parameters, basic information or geographical position relating to the terminal to be verified don't or doesn't satisfy requirements for a certified product, and the server sends failed verification results to the terminal to be verified.
2. Successful verification results are sent to the terminal to be verified if the i^{th} verification step succeeds in verification and i=n.

This signifies that the terminal to be verified succeeds in verification according all n verification steps, configuration parameters, performance parameters, basic information or geographical position relating to the terminal to be verified reaches or reach requirements for a certified product, and the server sends successful verification results to the terminal to be verified.

In conclusion, according to the anti-counterfeiting verification method provided by the embodiment, if the terminal to be verified is determined as a certified product according to verification results, the terminal to be verified needs simultaneously to meet following conditions:
1. both the terminal to be verified and the server complete all n verification steps in a predesigned order;
2. concerning each verification step, the terminal to be verified succeeds in calling the verification step;
3. concerning each verification step, the terminal to be verified succeeds in verification of the verification step.

Otherwise, the terminal to be verified may be considered to be a counterfeit or suspected to be a counterfeit.

In Step 409, the server sends verification results to the terminal to be verified.

Correspondingly, the terminal to be verified receives the verification results sent from the server.

In Step 410, the terminal to be verified shows verification results.

After receiving verification results, the terminal to be verified shows the verification results, hereby informing users of the fact whether the purchased terminal to be verified is a certified product.

In addition, in order to further improve the anti-counterfeiting success rate of the anti-counterfeiting verification solution provided by the present disclosure and to eliminate the possibility that lawless persons may directly feed back to users that according to the final verification result a terminal to be verified is a certified product by using a counterfeit client side and bypassing verification steps of the server. Following steps may be interactively executed between the terminal to be verified and the server.

In Step 411, a user account associated with the terminal to be verified is acquired by the terminal to be verified.

A user account is an account applied by users in advance for logging in the server. For example, the user account may be a cloud service account. Both the terminal to be verified and the user account are in the possession of a user, with an association relationship between both.

In Step 412, the terminal to be verified sends the user account to the server.

A user account may either be sent initiatively by the terminal to be verified to the server, or be sent to the server by the terminal to be verified after receiving an account acquisition instruction sent from the server. Wherein, the server may send an account acquisition instruction to the terminal to be verified if the terminal to be verified succeeds in verification according to all n verification steps, i.e., according to a verification result, the terminal to be verified is a certified product.

Correspondingly, the server receives a user account sent from the terminal to be verified.

In Step 413, the server stores a corresponding relation between the user account and the final verification results.

A corresponding relation between the user account and the verification results is stored by the server after generating the verification results corresponding to the terminal to be verified. Optionally, the server may also conduct associated storage of the user account and various information relating to the terminal to be verified, comprising one or more of associated information, configuration parameters, performance parameters, basic information, unique identification and verification results of each verification step.

In addition, the server may directly store a corresponding relation between a user account and verification results in the terminal, or store the corresponding relation between the user account and the verification results in other servers. For example, the server may store the foregoing corresponding relation in a cloud server.

In Step 414, the server receives a verification query request carrying a user account.

The server refers to a server storing a corresponding relation between the user account and the verification results. A user may log in the server by means of a user account or an application program or a browser in any terminal. In the meantime, the terminal sends to the server a verification query request carrying a user account.

In Step 415, the server queries whether verification results corresponding to the user account exist.

After receiving a verification query request carrying a user account, the server queries in the terminal whether a verification result corresponding to the user account received is stored in the terminal.

Wherein, possible query results are as below:
1. no verification result corresponding to the user account;
2. verification results corresponding to the user account exist and the verification results are successful verification results;
3. verification results corresponding to the user account exist but the verification results are failed verification results.

If a verification result corresponding to the user account is stored in the server, this means that an interaction in the foregoing verification step is conducted between the terminal to be verified in association with the user account and the server. Further, when the verification result is a successful verification result, this means that the terminal to be verified in association with the user account is a certified product; when the verification result is a failed verification result, this means that the terminal to be verified in association with the user account is an imitation or suspected to be an imitation.

If a verification result corresponding to the user account is not stored in the server, this means that an interaction in the foregoing verification step is not conducted between the terminal to be verified in association with the user account and the server, i.e., the user may download a counterfeit client side in previous verification processes, and the counterfeit client side bypasses verification steps of the server and directly feeds back to the user a verification result showing that the terminal is a certified product.

In Step 416, the server responds to the verification query request by using the verification results if exist.

After receiving a response corresponding to the verification query request, the terminal may provide the verification result for the user. Optionally, the server may further feed back to the terminal various information relating to the terminal to be verified, comprising one or more of associated information, configuration parameters, performance parameters, basic information, unique identification and verification results of each verification step.

In addition, if the terminal does not receive a response corresponding to the verification query request or receives a response indicating that noverification result corresponding to the user account exists in the server, this means that the terminal to be verified bypasses the foregoing verification steps, and the terminal to be verified is an imitation. Under the circumstances, the terminal may provide users with a prompt message indicating that the terminal to be verified is an imitation.

In conclusion, in the anti-counterfeiting verification method according to this exemplary embodiment, before executing an i^{th} verification step to verify a terminal to be verified, a server generates an encrypted message corresponding to the i^{th} verification step, and sends the encrypted message to a client side. After receiving a call request sent from the terminal to be verified and used to call the i^{th} verification step, the server doesn't execute the i^{th} verification step until the call request is determined as a call request initiated according to the encrypted message corresponding to the i^{th} verification step. The anti-counterfeiting verification method solves the problem of low anti-counterfeiting success rate by verification resulted from counterfeiting application programs in the background art. The verification success rate is improved because a counterfeit client side cannot meet conditions for triggering and executing the i^{th} verification step.

In addition, the anti-counterfeiting verification method provided by the embodiment may, by means of a user account associated with a terminal to be verified, a final verification result corresponding to the user account and stored in the server, and a follow-up query mechanism, eliminate the possibility that lawless persons may directly feed back to users that according to the final verification result a terminal is a certified product by using a counterfeit client side and by bypassing verification steps of the server, thus further improving the anti-counterfeiting success rate of the anti-counterfeiting verification method provided by the disclosure.

It should be also explained that: during the practical realization of a program, the client side running in a terminal to be verified may adopt Native C++ to compile verification steps and perform reinforcement through reinforcement technologies, such as code encryption, code compression and the like, thus furthest preventing lawless persons from simulating verification steps by means of decompilation and the like, or from uploading false parameters to the server.

The following is the embodiment of the device in the present disclosure, which may be configured to execute the embodiment of the method in the present disclosure. Please refer to the embodiment of the method in the present disclosure with regard to undisclosed details about the embodiment of the device in the present disclosure.

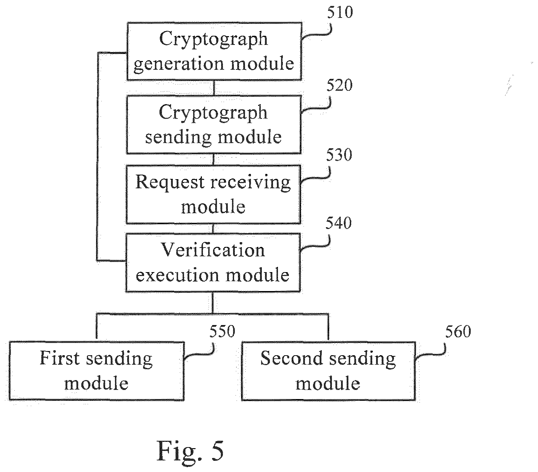

Fig. 5 is a block diagram of an anti-counterfeiting verification device according to an exemplary embodiment; the anti-counterfeiting verification device may realize to become the server in part or in whole by means of software and hardware or combination of both. The anti-counterfeiting verification device may include: a cryptograph generation module 510, a cryptograph sending module 520, a request receiving module 530, a verification execution module 540, a first sending module 550 and a second sending module 560.

The cryptograph generation module 510 is configured to generate an encrypted message corresponding to an i^{th} verification step, which is such a verification step among all n verification steps arrayed in a predesigned order for verifying a terminal to be verified, 1≤i≤n.

The cryptograph sending module 520 is configured to send the encrypted message to the terminal to be verified.

The request receiving module 530 is configured to receive a call request sent from the terminal to be verified and used to call the i^{th} verification step.

The verification execution module 540 is configured to execute the i^{th} verification step if the call request is a call request initiated according to an encrypted message corresponding to the i^{th} verification step.

The cryptograph generation module 510 is also configured to calculate i=i+1 and execute the step of generating an encrypted message corresponding to the ith verification step when the ith verification step succeeds in verification and i≠n.

The first sending module 550 is configured to send failed verification results to the terminal to be verified if the i^{th} verification step fails in verification.

The second sending module 560 is configured to send successful verification results to the terminal to be verified if the i^{th} verification step succeeds in verification and i=n.

In conclusion, in the anti-counterfeiting verification device according to this exemplary embodiment, before executing an i^{th} verification step to verify a terminal to be verified, a server generates an encrypted message corresponding to the i^{th} verification step, and sends the encrypted message to a client side. After receiving a call request sent from the terminal to be verified and used to call the i^{th} verification step, the server doesn't execute the i^{th} verification step until the call request is determined as a call request initiated according to the encrypted message corresponding to the i^{th} verification step. The anti-counterfeiting verification device solves the problem of low anti-counterfeiting success rate by verification resulted from counterfeiting application programs in the background art. The verification success rate is improved because a counterfeit client side cannot meet conditions for triggering and executing the i^{th} verification step.

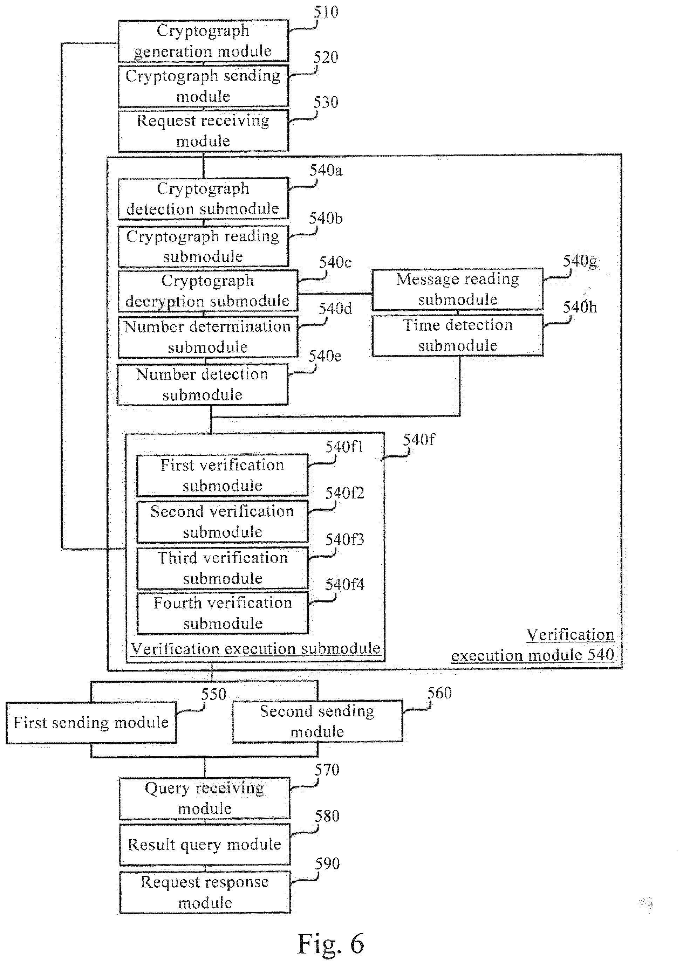

Fig. 6 is a block diagram of an anti-counterfeiting verification device according to another exemplary embodiment; the anti-counterfeiting verification device may realize to become the server in part or in whole by means of software and hardware or combination of both. The anti-counterfeiting verification device may include: a cryptograph generation module 510, a cryptograph sending module 520, a request receiving module 530, a verification execution module 540, a first sending module 550 and a second sending module 560.

The cryptograph generation module 510 is configured to generate an encrypted message corresponding to an i^{th} verification step, which is such a verification step among all n verification steps arrayed in a predesigned order for verifying a terminal to be verified, 1≤i≤n.

The cryptograph generation module 510 is also configured to encrypt an unencrypted message by means of a private key and acquire an encrypted message corresponding to the i^{th} verification step.

Wherein, when 1≤i≤n, the unencrypted message comprising associated information relating to the terminal to be verified and a step number corresponding to the i^{th} verification step; or

when i=1, the unencrypted message comprising associated information relating to the terminal to be verified; when i≥2, the unencrypted message comprising associated information relating to the terminal to be verified and a step number corresponding to an (i-1)^{th} verification step which has been called successfully.

The cryptograph sending module 520 is configured to send the encrypted message to the terminal to be verified.

The request receiving module 530 is configured to receive a call request sent from the terminal to be verified and used to call the i^{th} verification step.

The verification execution module 540 is configured to execute the i^{th} verification step if the call request is a call request initiated according to an encrypted message corresponding to the i^{th} verification step.

The verification execution module 540 includes: a cryptograph detection submodule 540a, a cryptograph reading submodule 540b, a cryptograph decryption submodule 540c, a number determination submodule 540d, a number detection submodule 540e and a verification execution submodule 540f.

The cryptograph detection submodule 540a is configured to detect whether the call request carries the encrypted message corresponding to the i^{th} verification step.

The cryptograph reading submodule 540b is configured to read out the encrypted message if the call request carries the encrypted message.

The cryptograph decryption submodule 540c is configured to decrypt the encrypted message by means of the private key and acquire the unencrypted message.

The number determination submodule 540d is configured to determine a step number corresponding to the i^{th} verification step according to contents of the unencrypted message.

The number detection submodule 540e is configured to detect whether an actual step number called by the call request is matched with a step number corresponding to the i^{th} verification step.

The verification execution submodule 540f is configured to execute the i^{th} verification step if the actual step number is matched with a step number corresponding to the i^{th} verification step.

Optionally, the verification execution module 540 also includes a message reading submodule 540g and a time detection submodule 540h.

The information reading submodule 540g is configured to read out a time message included in the unencrypted message if the unencrypted message also includes the time message.

The time detection submodule 540h is configured to detect, according to the time message, whether a moment at which the call request is received is within a valid time frame.

The verification execution submodule 540f is configured to execute the i^{th} verification step if the moment at which the call request is received is within the valid time frame and the actual step number is matched with a step number corresponding to the i^{th} verification step.

The verification execution submodule 540f includes: a first verification submodule 540f1; and/or a second verification submodule 540f2; and/or a third verification submodule 540f3; and/or a fourth verification submodule 540f4.

The first verification submodule 540f1 is configured to verify, according to configuration parameters of the terminal to be verified, the terminal to be verified if the i^{th} verification step is a configuration parameter verification step.

The second verification submodule 540f2 is configured to verify, according to performance parameters of the terminal to be verified, the terminal to be verified if the i^{th} verification step is a performance parameter verification step.

The third verification submodule 540f3 is configured to verify, according to basic information relating to the terminal to be verified and to an order database, the terminal to be verified if the i^{th} verification step is an order verification step, and the order database includes basic information relating to at least one terminal.

Optionally, the third verification submodule 540f3 is also configured to query whether basic information matched with basic information relating to the terminal to be verified exists in the order database, and to determine the i^{th} verification step to be successful in case of having basic information matched with basic information relating to the terminal to be verified.

The fourth verification submodule 540f4 is configured to verify, according to a geographical position corresponding to the terminal to be verified and to a unique identification, the terminal to be verified if the i^{th} verification step is a geographical position verification step.

Optionally, the fourth verification submodule 540f4 is also configured to: detect whether the terminal to be verified meets a predetermined condition, which refers to receiving, within a scheduled time frame, a call request sent from such a terminal to be verified as coming from different geographical positions but having the same unique identification of the terminal to be verified; and to determine the i^{th} verification step to be successful if the terminal to be verified does not meet the predetermined condition.

The cryptograph generation module 510 is also configured to calculate i=i+1 and execute the step of generating an encrypted message corresponding to the i^{th} verification step when the i^{th} verification step succeeds in verification and i≠n.

The first sending module 550 is configured to send failed verification results to the terminal to be verified if the i^{th} verification step fails in verification.

The second sending module 560 is configured to send successful verification results to the terminal to be verified if the i^{th} verification step succeeds in verification and i=n.

Optionally, the device may include: a query receiving module 570, a result query module 580 and a request response module 590.

The query receiving module 570 is configured to receive a verification query request carrying a user account.

The result query module 580 is configured to query whether verification results corresponding to the user account exist.

The request response module 590 is configured to respond to the verification query request by using the verification results if exist.

In conclusion, in the anti-counterfeiting verification device according to this exemplary embodiment, before executing an i^{th} verification step to verify a terminal to be verified, a server generates an encrypted message corresponding to the i^{th} verification step, and sends the encrypted message to a client side. After receiving a call request sent from the terminal to be verified and used to call the i^{th} verification step, the server doesn't execute the i^{th} verification step until the call request is determined as a call request initiated according to the encrypted message corresponding to the i^{th} verification step. The anti-counterfeiting verification device solves the problem of low anti-counterfeiting success rate by verification resulted from counterfeiting application programs in the background art. The verification success rate is improved because a counterfeit client side cannot meet conditions for triggering and executing the i^{th} verification step.

In addition, the anti-counterfeiting verification device provided by the embodiment may, by means of a user account associated with a terminal to be verified, a final verification result corresponding to the user account and stored in the server, and a follow-up query mechanism, eliminate the possibility that lawless persons may directly feed back to users that according to the final verification result a terminal is a certified product by using a counterfeit client side and by bypassing verification steps of the server, thus further improving the anti-counterfeiting success rate of the anti-counterfeiting verification method provided by the disclosure.

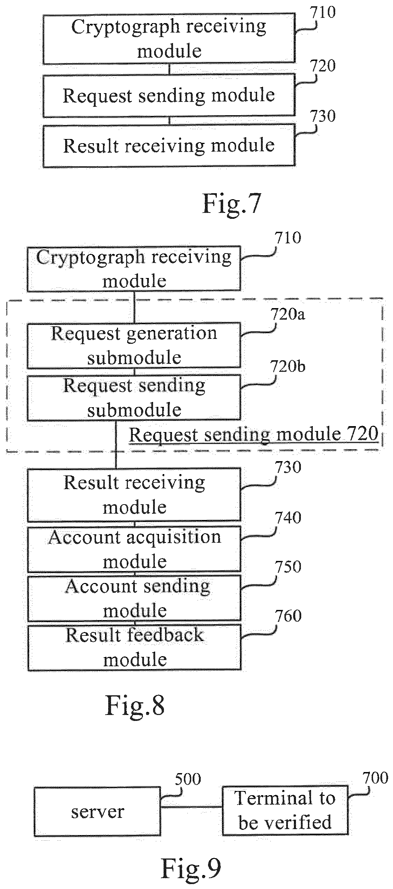

Fig. 7 is a block diagram of an anti-counterfeiting verification device according to a further exemplary embodiment; the anti-counterfeiting verification device may realize to become a terminal to be verified or other terminal equipment connected to the terminal to be verified in part or in whole by means of software or hardware or combination of both. The anti-counterfeiting verification device may include: a cryptograph receiving module 710, a request sending module 720 and a result receiving module 730.

The cryptograph receiving module 710 is configured to receive an encrypted message sent from the server and corresponding to an i^{th} verification step, which is such a verification step among all n verification steps arrayed in a predesigned order for verifying a terminal to be verified, 1≤i≤n.

The request sending module 720 is configured to send to the server a call request for calling the i^{th} verification step according to the encrypted message.

The result receiving module 730 is configured to receive verification results indicating failure or success sent from the server.

In conclusion, in the anti-counterfeiting verification device according to the embodiment, by receiving an encrypted message sent from a server and corresponding to an i^{th} verification step, a terminal to be verified sends to the server a call request for calling the i^{th} verification step according to the encrypted message so that the server verifies the terminal to be verified according to the foregoing call request decision and feeds back verification results to the terminal to be verified, solving the problem of low anti-counterfeiting success rate by verification resulted from counterfeiting application programs in the background art. The verification success rate is improved because a counterfeit client side cannot meet conditions for triggering and executing the i^{th} verification step.

Fig. 8 is a block diagram of an anti-counterfeiting verification device according to a further exemplary embodiment; the anti-counterfeiting verification device may realize to become a terminal to be verified or other terminal equipment connected to the terminal to be verified in part or in whole by means of software or hardware or combination of both. The anti-counterfeiting verification device may include: a cryptograph receiving module 710, a request sending module 720 and a result receiving module 730.

The cryptograph receiving module 710 is configured to receive an encrypted message sent from a server and corresponding to an i^{th} verification step, which is such a verification step among all n verification steps arrayed in a predesigned order for verifying a terminal to be verified, 1≤i≤n.

The request sending module 720 is configured to send to the server a call request for calling the i^{th} verification step according to the encrypted message.

The request sending module 720 includes a request generation submodule 720a and a request sending submodule 720b.
the request generation submodule 720a is configured to generate a call request for calling the i^{th} verification step, the call request carries an encrypted message sent from the server and corresponding to the i^{th} verification step.

The request sending submodule 720b is configured to send the call request to the server.

Wherein, the encrypted message is acquired by the server by encrypting an unencrypted message by means of a private key;
when 1≤i≤n, the unencrypted message includes associated information relating to the terminal to be verified and a step number corresponding to the i^{th} verification step;
when i=1, the unencrypted message includes associated information relating to the terminal to be verified; when i≥2, the unencrypted message comprising associated information relating to the terminal to be verified and a step number corresponding to an (i-1)^{th} verification step which has been called successfully.

The result receiving module 730 is configured to receive verification results indicating failure or success sent from the server.

Optionally, the device also includes: an account acquisition module 740, an account sending module 750 and a result feedback module 760.

The account acquisition module 740 is configured to acquire a user account associated with the terminal to be verified.

The account sending module 750 is configured to send the user account to the server.

The result feedback module 760 is configured to receive verification results fed back when the server succeeds in querying the verification results corresponding to the user account.

In conclusion, in the anti-counterfeiting verification device according to the embodiment, by receiving an encrypted message sent from a server and corresponding to an i^{th} verification step, a terminal to be verified sends to the server a call request for calling the i^{th} verification step according to the encrypted message so that the server verifies the terminal to be verified according to the foregoing call request decision and feeds back verification results to the terminal to be verified, solving the problem of low anti-counterfeiting success rate by verification resulted from counterfeiting application programs in the background art. The verification success rate is improved because a counterfeit client side cannot meet conditions for triggering and executing the i^{th} verification step.

In addition, the anti-counterfeiting verification device provided by the embodiment may, through a user account associated with a terminal to be verified, a final verification result corresponding to the user account and stored in the server, and a follow-up query mechanism, eliminate the possibility that lawless persons may directly feed back to users that according to the final verification result a terminal is a certified product by using a counterfeit client side and by bypassing verification steps of the server, thus further improving the verification success rate of the anti-counterfeiting verification method provided by the disclosure.

Fig. 9 is a block diagram showing an anti-counterfeiting verification system according to an exemplary embodiment, the anti-counterfeiting verification system includes a server 500 and a terminal to be verified 700. Wherein:
the server 500 may include an anti-counterfeiting verification device which may realize to become the server 500 in part or in whole by means of software and hardware or combination of both. The anti-counterfeiting verification device may be an anti-counterfeiting verification device provided by embodiments as shown in Fig. 5 or Fig. 6.

The terminal to be verified 700 is connected to the server 500 through wired network or wireless network.

The terminal to be verified 700 may include an anti-counterfeiting verification device which may realize to become the terminal to be verified 700 in part or in whole by means of software and hardware or combination of both. The anti-counterfeiting verification device may be an anti-counterfeiting verification device provided by embodiments as shown in Fig. 7 or Fig. 8.

In conclusion, in the anti-counterfeiting verification system according to this exemplary embodiment, before executing an i^{th} verification step to verify a terminal to be verified, a server generates an encrypted message corresponding to the i^{th} verification step, and sends the encrypted message to a client side. After receiving a call request sent from the terminal to be verified and used to call the i^{th} verification step, the server doesn't execute the i^{th} verification step until the call request is determined as a call request initiated according to the encrypted message corresponding to the i^{th} verification step. The anti-counterfeiting verification system solves the problem of low anti-counterfeiting success rate by verification resulted from counterfeiting application programs in the background art. The verification success rate is improved because a counterfeit client side cannot meet conditions for triggering and executing the i^{th} verification step.

With regard to the device in the above embodiment, detailed description of specific modes for conducting operation of modules has been made in the embodiment related to the method, no detailed illustration will be made herein.

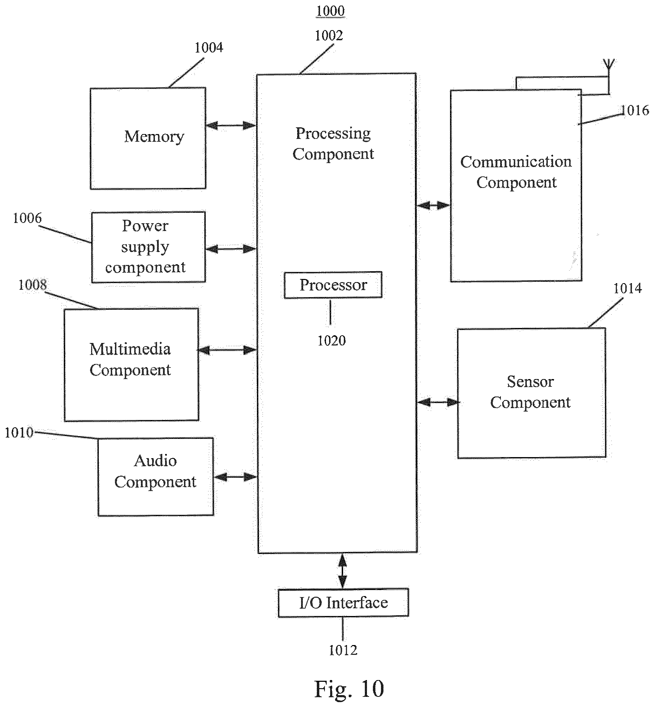

Fig. 10 is a block diagram of a device 1000 according to an exemplary embodiment. For example, the device 1000 may be a mobile telephone, a computer, a digital broadcasting terminal, a message transceiver device, a games console, a tablet device, a medical device, a fitness facility, a PDA (personal digital assistant) and the like.

Referring to Fig. 10, the device 1000 may include one or a plurality of components as below: a processor component 1002, a memory 1004, a power supply component 1006, a multimedia component 1008, an audio component 1010, an input/output (I/O) interface 1012, a sensor component 1014 and a communication component 1016.

The processor component 1002 usually controls the overall operation of the device 1000, for example, display, telephone call, data communication, and operation associated with camera operation and record operation. The processor component 1002 may include one or a plurality of processors 1020 for executing instructions so as to complete steps of above method in part or in whole. In addition, the processor component 1002 may include one or a plurality of modules for the convenience of interaction between the processor component 1002 and other components. For example, the processor component 1002 may include a multimedia module for the convenience of interaction between the multimedia component 1008 and the processor component 1002.

The memory 1004 is configured to store data of different types so as to support the operation of the device 1000. Examples of the data include any application program or approach directive for operation of the device 1000, including contact data, phonebook data, message, picture and video, etc. The memory 1004 may be realized by volatile or non-volatile memory device of any type or combination thereof, for example, static random access memory (SRAM), electrically erasable programmable read-only memory (EEPROM), erasable programmable read only memory (EPROM), programmable read-only memory (PROM), read-only memory (ROM), magnetic memory, flash memory, magnetic disk or optical disk.

The power supply component 1006 provides power for components of the device 1000. The power supply component 1006 may include a power management system, one or a plurality of power supplies, and other components associated with generation, management and power distribution of the device 1000.

The multimedia component 1008 includes a screen between the device 1000 and a user and for providing an output interface. In some embodiments, the screen may include an LCD (Liquid Crystal Display) and a touch panel (TP). If the screen includes a touch panel, the screen may be realized as a touch screen for receiving input signal from users. The touch panel includes one or a plurality of touch sensors for sensing gestures on the touch panel, for example, touching and sliding, etc. The touch sensor not only can sensor trip boundary of touching or sliding, but also can detect the duration and pressure related to the touching or sliding operation. In some embodiments, the multimedia component 1008 includes a front-facing camera and/or a rear-facing camera. When the device 1000 is under an operation mode, for example, capture mode or video mode, the front-facing camera and/or the rear-facing camera may receive external multimedia data. Each front-facing camera and rear-facing camera may be a fixed optical lens system or have focal length and optical zoom capacity.

The audio component 1010 is configured to output and/or input audio signal. For example, the audio component 1010 includes a microphone (MIC); when the device 1000 is under an operation mode such as call mode, record mode and speech recognition mode, the microphone is configured to receive external audio signal. The audio signal received may be further stored in the memory 1004 or sent out by the communication component 1016. In some embodiments, the audio component 1010 also includes a loudspeaker for outputting audio signal.

The I/O interface 1012 provides interface for the processor component 1002 and peripheral interface modules, the peripheral interface modules may be a keyboard, a click wheel and buttons, etc. These buttons may include but not limited to: home button, volume button, start button and locking button.

The sensor component 1014 includes one or a plurality of sensors for providing the device 1000 with state evaluation from all aspects. For example, the sensor component 1014 may detect the on/off state of the device 1000, relative positioning of components, for example, the components are the displayer and keypads of the device 1000; the sensor component 1014 also may detect the position change of the device 1000 or a component thereof, the presence or absence of users' touch on the device 1000, the direction or acceleration/deceleration of the device 1000, and temperature variation of the device 1000. The sensor component 1014 may also include a proximity detector, which is configured to detect the presence of nearby objects in case of no physical touch. The sensor component 1014 may also include an optical sensor, for example, CMOS or CCD image sensor for imaging. In some embodiments, the sensor component 1014 may also include an acceleration sensor, a gyro sensor, a magnetic sensor, a pressure sensor, or a temperature sensor.

The communication component 1016 is configured to facilitate wired communication or wireless communication between the device 1000 and other equipment. The device 1000 is available for access to wireless network based on communication standards, for example, WiFi, 2G or 3G, or combination thereof. In an exemplary embodiment, the communication component 1016 receives by means of a broadcast channel the broadcast signal or broadcast-related information from external broadcast management systems. In an exemplary embodiment, the communication component 1016 also includes a near field communication (NFC) module for promoting short-range communication. For example, the NFC module may be realized on the basis of Radio Frequency Identification (RFID) Technology, Infrared Data Association (IrDA) Technology, Ultra-wide Bandwidth (UWB) Technology, Bluetooth (BT) Technology and other technologies.

In exemplary embodiments, the device 1000 may be realized by one or a plurality of application specific integrated circuits (ASIC), digital signal processors (DSP), digital signal processing equipment (DSPD), programmable logic devices (PLD), field programmable gate arrays (FPGA), controllers, microcontrollers, microprocessors or other electronic components, configured to execute the anti-counterfeiting verification method of the terminal side to be verified in embodiments as shown in above Fig.3 or Fig.4.

In exemplary embodiments, a non-transitory computer-readable storage medium including instructions is also provided, for example, a memory 1004 including instructions, these instructions may be executed by the processors 1020 of the device 1000 so as to perform the anti-counterfeiting verification method of the terminal side to be verified in embodiments as shown in above Fig.3 or Fig.4. For example, the non-transitory computer-readable storage medium may be ROM, random access memory (RAM), CD-ROM, magnetic tape, floppy disk and optical data storage device, etc.

A non-transitory computer-readable storage medium, wherein instructions in the storage medium are executed by processors of the device 1000 so as to execute the anti-counterfeiting verification method of the terminal side to be verified in embodiments as shown in above Fig.3 or Fig.4.

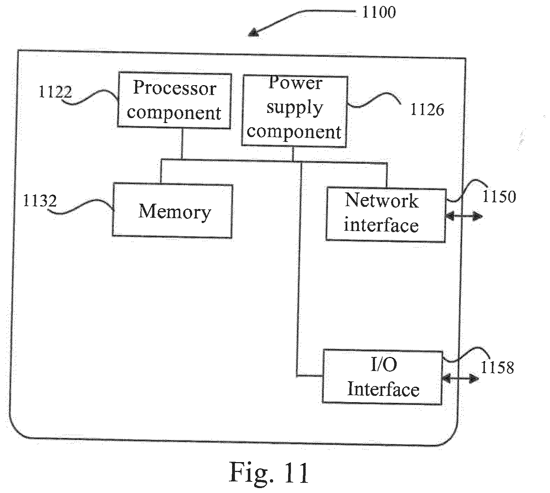

Fig. 11 is a block diagram of a device 1100 according to an exemplary embodiment. For example, the device 1100 may be implemented as a server. Referring to Fig.11, the device 1100 includes a processor component 1122, and further includes one or a plurality of processors, and memory resource represented by the memory 1132 and configured to store instructions that can be executed by the processor component 1122, for example, application program. The application program stored in the memory 1132 may include one or a plurality of modules each of which is corresponding to a set of instructions. In addition, the processor component 1122 is configured to execute instructions so as to execute the anti-counterfeiting verification method at a server side in the embodiments as shown in foregoing Fig. 2 or Fig. 4.

The device 1100 may also include a power supply module 1126 configured to execute the power management of the device 1100, a wired or wireless network interface 1150 configured to connect the device 1100 to the network, and an input/output (I/O) interface 1158. The device 1100 can operate an operating system based on and stored in the memory 1132, for example, Windows ServerTM, Mac OS XTM, UnixTM, LinuxTM, FreeBSDTM or other similar operating systems.

## Claims

1. A verification method performed at a server, the method involving n verification steps arrayed in a predesigned order for verifying a terminal to be verified, where 1≤i≤n, the method comprising:
A) generating an encrypted message corresponding to an i^{th} verification step;
B) sending the encrypted message to the terminal;
C) receiving a call request sent from the terminal and used to call the i^{th} verification step;
D) executing the i^{th} verification step if the call request is a call request initiated according to the encrypted message corresponding to the i^{th} verification step;
E) calculating i+1 if the i^{th} verification step succeeds in verification and i≠n;
F) sending failed verification results to the terminal if the i^{th} verification step fails in verification;
G) sending successful verification results to the terminal if the i^{th} verification step succeeds in verification and i=n; and
H) repeating steps (A) to (G) with i=i+1, up to and including i=n;
wherein step (A) of generating an encrypted message corresponding to an i^{th} verification step comprises:
encrypting an unencrypted message by means of a private key and acquiring the encrypted message corresponding to the i^{th} verification step;
wherein, when 1≤i≤n, the unencrypted message comprises associated information relating to the terminal and a step number corresponding to the i^{th} verification step; or
when i=1, the unencrypted message comprises associated information relating to the terminal; when i≥2, the unencrypted message comprises associated information relating to the terminal and a step number corresponding to an (i-1)^{th} verification step which has been called successfully;
wherein step (D) of executing the i^{th} verification step if the call request is a call request initiated according to the encrypted message corresponding to the i^{th} verification step comprises:
detecting whether the call request carries the encrypted message corresponding to the i^{th} verification step;
reading the encrypted message where the call request carries the encrypted message;
decrypting the encrypted message by means of the private key and acquiring the unencrypted message;
determining a step number corresponding to the i^{th} verification step according to contents of the unencrypted message;
detecting whether an actual step number called by the call request is matched with a step number corresponding to the i^{th} verification step; and
executing the i^{th} verification step if the actual step number is matched with a step number corresponding to the i^{th} verification step;
wherein at least one of the verification steps is a geographical position verification step and the executing the i^{th} verification step comprises verifying the terminal, according to a geographical position corresponding to the terminal and to a unique identification, if the i^{th} verification step is a geographical position verification step;
wherein, the verifying the terminal, according to a geographical position corresponding to the terminal and to a unique identification, comprises:
detecting whether the terminal meets a predetermined condition, which includes receiving, within a scheduled time frame, a call request sent from a terminal coming from different geographical positions but having the same unique identification as the terminal to be verified; and
determining the i^{th} verification step to be successful if the terminal does not meet the predetermined condition.

2. The method according to claim 1, wherein the executing the i^{th} verification step if the call request is a call request initiated according to an encrypted message corresponding to the i^{th} verification step further comprises:
if the unencrypted message further comprises a time message, reading out the time message comprised in the unencrypted message;
detecting, according to the time message, whether a moment at which the call request is received is within a valid time frame; and
executing the i^{th} verification step if a moment at which the call request is received is within the valid time frame and the actual step number is matched with a step number corresponding to the i^{th} verification step.

3. The method according to claim 1, wherein the verifying the terminal, according to basic information relating to the terminal and to an order database, comprises:
querying whether the order database has basic information matched with basic information relating to the terminal; and
determining the i^{th} verification step to be successful in case of having basic information matched with basic information relating to the terminal.

4. The method according to any one of claims 1-3, wherein the method further comprises:
receiving a verification query request carrying a user account;
querying whether verification results corresponding to the user account exist; and
responding to the verification query request by using the verification results if they exist.

5. A verification method performed in a system comprising a client and a server, the method comprising performing on the server side the method of any of claims 1 to 4 and further performing on the client side n verification steps arrayed in a predesigned order for verifying a terminal, where 1≤i≤n the method comprising, at the client side:
A) receiving an encrypted message sent from a server and corresponding to an i^{th} verification step;
B) sending to the server a call request for calling the i^{th} verification step according to the encrypted message;
C) receiving verification results indicating failure or success sent from the server;
D) repeating steps (A) to (C) with i=i+1, up to and including i=n;
wherein the sending to the server a call request for calling the i^{th} verification step according to the encrypted message comprises:
generating a call request for calling the i^{th} verification step, the call request carrying an encrypted message sent from the server and corresponding to the i^{th} verification step; and
sending the call request to the server;
wherein, the encrypted message is acquired by the server by encrypting an unencrypted message by means of a private key;
when 1≤i≤n, the unencrypted message comprises associated information relating to the terminal to be verified and a step number corresponding to the i^{th} verification step; or
when i=1 the unencrypted message comprises associated information relating to the terminal to be verified, and when i≥2 the unencrypted message comprises associated information relating to the terminal to be verified and a step number corresponding to an (i-1)^{th} verification step which has been called successfully;
wherein at least one of the verification steps is a geographical position verification step and wherein a geographical position of the terminal is sent from the terminal to the server or obtained by the server according to an IP address corresponding to the terminal and wherein a unique identification is sent to the server, if the i^{th} verification step is a geographical position verification step.

6. The method of claim 5, wherein the method further comprises:
acquiring a user account associated with the terminal to be verified;
sending the user account to the server; and
receiving verification results fed back when the server succeeds in querying the verification results corresponding to the user account.

7. A server device for anti-counterfeiting verification, the server device configured to carry out the method of any of claims 1 to 4.

8. A verification system, comprising a terminal to be verified and a server connected to the terminal through wireless network or wired network; the system being adapted to perform the method of claims 5 or 6.

9. A computer program product, which when executed on a processor of a server, performs a method according to any one of claims 1-4, or when executed on a processor of a client side, performs a method according to any one of claims 5 or 6.

## Patentansprüche

1. Überprüfungsverfahren, das auf einem Server durchgeführt wird, wobei das Verfahren n Überprüfungsschritte beinhaltet, die in einer vorbestimmten Reihenfolge angeordnet sind, um ein zu überprüfendes Endgerät zu verifizieren, wobei 1≤i≤n ist, wobei das Verfahren Folgendes beinhaltet:
A) Erzeugen einer verschlüsselten Nachricht entsprechend einem i-ten Überprüfungsschritt;
B) Senden der verschlüsselten Nachricht zu dem Endgerät;
C) Empfangen einer vom Endgerät gesendeten Aufrufanforderung, die zum Aufrufen des i-ten Überprüfungsschrittes benutzt wird;
D) Ausführen des i-ten Überprüfungsschrittes, wenn die Aufrufanforderung eine Aufrufanforderung ist, die gemäß der verschlüsselten Nachricht entsprechend dem i-ten Überprüfungsschritt initiiert wurde;
E) Berechnen von i+1, wenn die Überprüfung im i-ten Überprüfungsschritt erfolgreich und i≠n ist;
F) Senden von erfolglosen Überprüfungsergebnissen zum Endgerät, wenn die Überprüfung im i-ten Überprüfungsschritt erfolglos ist;
G) Senden von erfolgreichen Überprüfungsergebnissen zum Endgerät, wenn die Überprüfung im i-ten Überprüfungsschritt erfolgreich und i=n ist; und
H) Wiederholen der Schritte (A) bis (G) mit i=i+l, bis zu und einschließlich i=n;
wobei Schritt (A) des Erzeugens einer verschlüsselten Nachricht entsprechend einem i-ten Überprüfungsschritt Folgendes beinhaltet:
Verschlüsseln einer unverschlüsselten Nachricht mittels eines privaten Schlüssels und Erfassen der verschlüsselten Nachricht entsprechend dem i-ten Überprüfungsschritt;
wobei, wenn 1≤i≤n ist, die unverschlüsselte Nachricht assoziierte Informationen in Bezug auf das Endgerät und eine Schrittnummer entsprechend dem i-ten Überprüfungsschritt umfasst; oder
wenn i=1 ist, die unverschlüsselte Nachricht assoziierte Informationen in Bezug auf das Endgerät umfasst; wenn i≥2 ist, die unverschlüsselte Nachricht assoziierte Informationen in Bezug auf das Endgerät und eine Schrittnummer entsprechend einem (i-1)-ten Überprüfungsschritt umfasst, der erfolgreich aufgerufen wurde;
wobei Schritt (D) des Ausführens des i-ten Überprüfungsschrittes, wenn die Aufrufanforderung eine Aufrufanforderung ist, die gemäß der verschlüsselten Nachricht entsprechend dem i-ten Überprüfungsschritt eingeleitet wurde, Folgendes beinhaltet:
Erkennen, ob die Aufrufanforderung die verschlüsselte Nachricht entsprechend dem i-ten Überprüfungsschritt trägt;
Lesen der verschlüsselten Nachricht, wenn die Aufrufanforderung die verschlüsselte Nachricht trägt;
Entschlüsseln der verschlüsselten Nachricht mittels des privaten Schlüssels und Erfassen der unverschlüsselten Nachricht;
Bestimmen einer Schrittnummer entsprechend dem i-ten Überprüfungsschritt gemäß dem Inhalt der unverschlüsselten Nachricht;
Erkennen, ob eine tatsächliche Schrittnummer, die durch die Aufrufanforderung aufgerufen wird, mit einer Schrittnummer entsprechend dem i-ten Überprüfungsschritt übereinstimmt; und
Ausführen des i-ten Überprüfungsschritts, wenn die tatsächliche Schrittnummer mit einer Schrittnummer entsprechend dem i-ten Überprüfungsschritt übereinstimmt;
wobei mindestens einer der Überprüfungsschritte ein Geographische-Position-Überprüfungsschritt ist und das Ausführen des i-ten Überprüfungsschrittes das Überprüfen des Endgerätes gemäß einer geographischen Position entsprechend dem Endgerät und einer eindeutigen Identifikation beinhaltet, wenn der i-te Überprüfungsschritt ein Geographische-Position-Überprüfungsschritt ist;
wobei das Überprüfen des Endgeräts gemäß einer geographischen Position entsprechend dem Endgerät und einer eindeutigen Identifikation Folgendes beinhaltet:
Erkennen, ob das Endgerät eine vorbestimmte Bedingung erfüllt, die das Empfangen, innerhalb eines geplanten Zeitrahmens, einer von einem Endgerät gesendeten Aufrufanforderung beinhaltet, die von unterschiedlichen geographischen Positionen kommt, aber die gleiche eindeutige Identifikation wie das zu überprüfende Endgerät hat; und
Feststellen, dass der i-te Überprüfungsschritt erfolgreich war, wenn das Endgerät die vorbestimmte Bedingung nicht erfüllt.

2. Verfahren nach Anspruch 1, wobei das Ausführen des i-ten Überprüfungsschritts, wenn die Aufrufanforderung eine Aufrufanforderung ist, die gemäß einer verschlüsselten Nachricht entsprechend dem i-ten Überprüfungsschritt initiiert wurde, ferner Folgendes beinhaltet:
Auslesen, wenn die unverschlüsselte Nachricht ferner eine Zeitnachricht enthält, der in der unverschlüsselten Nachricht enthaltenen Zeitnachricht;
Erkennen, gemäß der Zeitnachricht, ob ein Zeitpunkt, zu dem die Aufrufanfrage empfangen wird, innerhalb eines gültigen Zeitrahmens liegt; und
Ausführen des i-ten Überprüfungsschrittes, wenn ein Zeitpunkt, zu dem die Aufrufanforderung empfangen wird, innerhalb des gültigen Zeitrahmens liegt und die tatsächliche Schrittnummer mit einer Schrittnummer entsprechend dem i-ten Überprüfungsschritt übereinstimmt.

3. Verfahren nach Anspruch 1, wobei das Überprüfen des Endgeräts anhand von Basisinformationen in Bezug auf das Endgerät und eine Auftragsdatenbank Folgendes beinhaltet:
Abfragen, ob die Auftragsdatenbank Basisinformationen hat, die mit Basisinformationen in Bezug auf das Endgerät übereinstimmen; und
Feststellen, dass der i-te Überprüfungsschritt erfolgreich ist, wenn die Basisinformationen mit Basisinformationen in Bezug auf das Endgerät übereinstimmen.

4. Verfahren nach einem der Ansprüche 1-3, wobei das Verfahren ferner Folgendes beinhaltet:
Empfangen einer Überprüfungsabfrage, die ein Benutzerkonto enthält;
Abfragen, ob dem Benutzerkonto entsprechende Überprüfungsergebnisse existieren; und
Reagieren auf die Überprüfungsabfrageanforderung durch Verwenden der Überprüfungsergebnisse, falls sie existieren.

5. Überprüfungsverfahren, das in einem System mit einem Client und einem Server durchgeführt wird, wobei das Verfahren auf der Serverseite die Durchführung des Verfahrens nach einem der Ansprüche 1 bis 4 und ferner auf der Client-Seite die Durchführung von n Überprüfungsschritten beinhaltet, die in einer vorgegebenen Reihenfolge angeordnet sind, um ein Endgerät zu überprüfen, wobei 1≤i≤n ist, wobei das Verfahren auf der Client-Seite Folgendes beinhaltet:
A) Empfangen einer verschlüsselten Nachricht, die von einem Server gesendet wurde und einem i-ten Überprüfungsschritt entspricht;
B) Senden einer Aufrufanforderung zum Server zum Aufrufen des i-ten Überprüfungsschritts gemäß der verschlüsselten Nachricht;
C) Empfangen vom Server gesendeter Überprüfungsergebnisse, die Erfolg oder Misserfolg anzeigen;
D) Wiederholen der Schritte (A) bis (C) mit i=i+l, bis zu und einschließlich i=n;
wobei das Senden einer Aufrufanforderung zum Server zum Aufrufen des i-ten Überprüfungsschrittes gemäß der verschlüsselten Nachricht Folgendes beinhaltet:
Erzeugen einer Aufrufanforderung zum Aufrufen des i-ten Überprüfungsschrittes, wobei die Aufrufanforderung eine vom Server gesendete verschlüsselte Nachricht enthält, die dem i-ten Überprüfungsschritt entspricht; und
Senden der Aufrufanforderung zum Server;
wobei die verschlüsselte Nachricht vom Server durch Verschlüsseln einer unverschlüsselten Nachricht mittels eines privaten Schlüssels erhalten wird;
wenn 1≤i≤n ist, die unverschlüsselte Nachricht assoziierte Informationen in Bezug auf das zu überprüfende Endgerät und eine Schrittnummer entsprechend dem i-ten Überprüfungsschritt umfasst; oder
wenn i=l ist, die unverschlüsselte Nachricht assoziierte Informationen in Bezug auf das zu überprüfende Endgerät enthält, und wenn i≥2 ist, die unverschlüsselte Nachricht assoziierte Informationen in Bezug auf das zu überprüfende Endgerät und eine Schrittnummer entsprechend einem (i-1)-ten Überprüfungsschritt enthält, der erfolgreich aufgerufen wurde;
wobei mindestens einer der Überprüfungsschritte ein Geografische-Position-Überprüfungsschritt ist und wobei eine geografische Position des Endgeräts vom Endgerät zum Server gesendet oder vom Server gemäß einer dem Endgerät entsprechenden IP-Adresse erhalten wird, und wobei eine eindeutige Identifikation zum Server gesendet wird, wenn der i-te Überprüfungsschritt ein Geografische-Position-Überprüfungsschritt ist.

6. Verfahren nach Anspruch 5, wobei das Verfahren ferner Folgendes beinhaltet:
Erfassen eines mit dem zu überprüfenden Endgerät assoziierten Benutzerkontos;
Senden des Benutzerkontos zum Server; und
Empfangen von Überprüfungsergebnissen, die zurückgemeldet werden, wenn es dem Server gelingt, die dem Benutzerkonto entsprechenden Überprüfungsergebnisse abzufragen.

7. Servergerät zur Fälschungsschutzüberprüfung, wobei das Servergerät zum Durchführen des Verfahrens nach einem der Ansprüche 1 bis 4 konfiguriert ist.

8. Überprüfungssystem, das ein zu überprüfendes Endgerät und einen Server umfasst, der mit dem Endgerät über ein drahtloses oder verdrahtetes Netzwerk verbunden ist;
wobei das System zum Durchführen des Verfahrens nach Anspruch 5 oder 6 ausgelegt ist.

9. Computerprogrammprodukt, das bei Ausführung auf einem Prozessor eines Servers ein Verfahren nach einem der Ansprüche 1-4 durchführt oder das bei Ausführung auf einem Prozessor einer Client-Seite ein Verfahren nach einem der Ansprüche 5 oder 6 durchführt.

## Revendications

1. Procédé de vérification réalisé au niveau d'un serveur, le procédé impliquant n étapes de vérification agencées dans un ordre préconçu pour vérifier un terminal à vérifier, où 1≤i≤n, le procédé comprenant :
A) la génération d'un message crypté correspondant à une i^{ème} étape de vérification ;
B) l'envoi du message crypté au terminal ;
C) la réception d'une demande d'appel à partir du terminal et servant à appeler la i^{ème} étape de vérification ;
D) l'exécution de la i^{ème} étape de vérification si la demande d'appel est une demande d'appel lancée conformément au message crypté correspondant à la i^{ème} étape de vérification ;
E) le calcul de i+1 si la i^{ème} étape de vérification réussit la vérification et i ≠n ;
F) l'envoi de résultats de vérification négative au terminal si la i^{ème} étape de vérification échoue à la vérification ;
G) l'envoi de résultats de vérification positive au terminal si la i^{ème} étape de vérification réussit la vérification et i=n ; et
H) la répétition des étapes (A) à (G) avec i=i+1, jusqu'à i=n inclus ;
dans lequel l'étape (A) de génération d'un message crypté correspondant à une i^{ème} étape de vérification comprend :
le cryptage d'un message non crypté au moyen d'une clé privée et l'acquisition du message crypté correspondant à la i^{ème} étape de vérification ;
dans lequel, quand 1≤i≤n, le message non crypté comprend des informations associées relatives au terminal et un numéro d'étape correspondant à la i^{ème} étape de vérification ; ou
quand i=l, le message non crypté comprend des informations associées relatives au terminal ; quand i≥2, le message non crypté comprend des informations associées relatives au terminal et un numéro d'étape correspondant à une (i-1)^{ème} étape de vérification qui a été appelée avec succès ;
dans lequel l'étape (D) d'exécution de la i^{ème} étape de vérification si la demande d'appel est une demande d'appel lancée conformément au message crypté correspondant à la i^{ème} étape de vérification comprend :
la détection que la demande d'appel porte ou non le message crypté correspondant à la i^{ème} étape de vérification ;
la lecture du message crypté quand la demande d'appel porte le message crypté ;
le décryptage du message crypté au moyen de la clé privée et l'acquisition du message non crypté ;
la détermination d'un numéro d'étape correspondant à la i^{ème} étape de vérification en fonction du contenu du message non crypté ;
la détection qu'un numéro d'étape actuelle appelé par la demande d'appel est associé ou non à un numéro d'étape correspondant à la i^{ème} étape de vérification ; et
l'exécution de la i^{ème} étape de vérification si le numéro d'étape actuelle est associé à un numéro d'étape correspondant à la i^{ème} étape de vérification ;
dans lequel au moins une des étapes de vérification est une étape de vérification de position géographique et l'exécution de la i^{ème} étape de vérification comprend la vérification du terminal, en fonction d'une position géographique correspondant au terminal et d'une identification unique, si la i^{ème} étape de vérification est une étape de vérification de position géographique;
dans lequel, la vérification du terminal, en fonction d'une position géographique correspondant au terminal et d'une identification unique, comprend :
la détection que le terminal satisfait ou non une condition prédéterminée, laquelle comporte la réception, dans un délai prévu, d'une demande d'appel envoyée à partir d'un terminal provenant de différentes positions géographiques, mais ayant la même identification unique que le terminal à vérifier ; et
la détermination que la i^{ème} étape de vérification a réussi si le terminal ne satisfait pas la condition prédéterminée.

2. Procédé selon la revendication 1, dans lequel l'exécution de la i^{ème} étape de vérification si la demande d'appel est une demande d'appel lancée conformément à un message crypté correspondant à la i^{ème} étape de vérification comprend en outre :
si le message non crypté comprend en outre un message temporel, la lecture du message temporel compris dans le message non crypté ;
la détection, en fonction du message temporel, qu'un moment auquel la demande d'appel est reçue est compris ou non dans un délai valide ; et
l'exécution de la i^{ème} étape de vérification si un moment auquel la demande d'appel est reçue est compris dans le délai valide et le numéro d'étape actuelle est associé à un numéro d'étape correspondant à la i^{ème} étape de vérification.

3. Procédé selon la revendication 1, dans lequel le terminal de vérification, conformément aux informations de base relatives au terminal et à une base de données d'ordre, comprend :
l'interrogation que la base de données d'ordre contient ou non des informations de base correspondant avec des informations de base relatives au terminal ; et
la détermination que la i^{ème} étape de vérification a réussi dans le cas où les informations de base correspondent avec des informations de base relatives au terminal.

4. Procédé selon l'une quelconque des revendications 1 à 3, le procédé comprenant en outre :
la réception d'une demande d'interrogation de vérification portant un compte d'utilisateur ;
l'interrogation que des résultats de vérification correspondant au compte d'utilisateur existent ou non; et
la réponse à la demande d'interrogation de vérification en utilisant les résultats de vérification s'ils existent.

5. Procédé de vérification exécuté dans un système comprenant un client et un serveur, le procédé comprenant la réalisation côté serveur du procédé selon l'une quelconque des revendications 1 à 4 et la réalisation en outre côté client de n étapes de vérification agencées dans un ordre préconçu pour vérifier un terminal, où 1≤i≤n, le procédé comprenant, côté client :
A) la réception d'un message crypté envoyé par un serveur et correspondant à une i^{ème} étape de vérification ;
B) l'envoi au serveur d'une demande d'appel pour appeler la i^{ème} étape de vérification conformément au message crypté ;
C) la réception de résultats de vérification indiquant une échec ou une réussite envoyés par le serveur ;
D) la répétition des étapes (A) à (C) avec i=i+1, jusqu'à i=n inclus ;
dans lequel l'envoi au serveur d'une demande d'appel pour appeler la i^{ème} étape de vérification conformément au message crypté comprend :
la génération d'une demande d'appel pour appeler la i^{ème} étape de vérification, la demande d'appel portant un message crypté envoyé par le serveur et correspondant à la i^{ème} étape de vérification ; et
l'envoi de la demande d'appel au serveur ;
dans lequel le message crypté est acquis par le serveur en cryptant un message non crypté au moyen d'une clé privée ;
quand 1≤i≤n, le message non crypté comprend des informations associées relatives au terminal à vérifier et un numéro d'étape correspondant à la i^{ème} étape de vérification ; ou
quand i=1 le message non crypté comprend des informations associées relatives au terminal à vérifier, et quand i≥2, le message non crypté comprend des informations associées relatives au terminal à vérifier et un numéro d'étape correspondant à une (i-1)^{ème} étape de vérification qui a été appelée avec succès ;
dans lequel au moins une des étapes de vérification est une étape de vérification de position géographique et dans lequel une position géographique du terminal est envoyée par le terminal au serveur ou est obtenue par le serveur selon une adresse IP correspondant au terminal et dans lequel une identification unique est envoyée au serveur, si la i^{ème} étape de vérification est une étape de vérification de position géographique.

6. Procédé selon la revendication 5, le procédé comprenant en outre :
l'acquisition d'un compte utilisateur associé au terminal à vérifier ;
l'envoi du compte utilisateur au serveur ; et
la réception de résultats de vérification renvoyés lorsque le serveur réussit à interroger les résultats de vérification correspondant au compte d'utilisateur.

7. Dispositif serveur de vérification de contrefaçons, le dispositif serveur étant configuré pour réaliser le procédé selon l'une des revendications 1 à 4.

8. Système de vérification, comprenant un terminal à vérifier et un serveur connecté au terminal via un réseau sans fil ou un réseau câblé ;
le système étant conçu en outre pour exécuter le procédé selon les revendications 5 ou 6.

9. Produit de programme d'ordinateur qui, à son exécution sur un processeur d'un serveur, réalise un procédé selon l'une quelconque des revendications 1 à 4, ou à son exécution sur un processeur côté client, réalise une méthode selon l'une quelconque des revendications 5 ou 6.
